# EUROPEAN PATENT APPLICATION

(11) **EP 4 843 383 A1**
(43) Date of publication of application: **25.11.2026**
(21) Application number: 26174591.3
(22) Date of filing: 24.04.2026
(51) Int. Cl.: A01K 1/015

(54) **PET LITTER, IN PARTICULAR A PLANT-BASED CLUMPING LITTER**

(30) Priority: 28.04.2025 IT 202500009324
(71) Applicant: Croita Group d.o.o., 10000 Zagreb (HR)
(72) Inventor: RAGGI, Michele, 61046 Piobbico (PU) (IT)
(74) Representative: Fiume, Orazio

(57) **Abstract**

The invention discloses a method for producing a pet litter, preferably for cats, comprising: a first plant-based component consisting of wood residues, preferably conifer wood; a second plant-based component in the form of shredded straw; an additive comprising a starch, for example corn starch, and sunflower oil; and a third plant-based component comprising a by-product of the processing of a cereal selected from barley and/or corn.

## Description

### TECHNICAL FIELD

The present invention relates to the field of pet products and, more specifically, concerns a plant-based clumping litter for domestic animals, preferably for cats.

The invention further relates to a method for producing a plant-based clumping litter comprising: a first plant-based component consisting of wood waste, preferably conifer wood; a second plant-based component in the form of shredded straw; an additive comprising: a starch, for example corn starch, and sunflower oil; and a third plant-based component comprising a by-product of the processing of a cereal selected from barley and/or corn.

### STATE OF THE ART

In the prior art it is known that animal litters, preferably for cats, are compounds used to provide animals with a place to urinate and defecate in a hygienic and comfortable manner. Such litters are used in specific containers, such as for example trays or litter boxes, which allow the domestic environment to be kept clean and orderly.

Litters are generally made of materials having the ability to absorb moisture, contain odors, and provide a soft and natural surface for animals.

Cat litters and other pet litters currently available on the market are distinguished on the basis of two factors:
- the material used for their manufacture, which may be mineral or vegetable; and
- the type of operation, namely absorbent litters or clumping litters.

Accordingly, in the prior art the following are known:
- mineral litters: made from extracted materials such as bentonite, sepiolite, clay, silica, and the like;
- plant-based litters: made from natural and biodegradable materials such as corn, barley, tofu, wood fibers, cellulose, and the like.

However, both of these types of litter exhibit limitations in terms of absorbent, hygienic, and environmental properties.

In particular, mineral litters, although having good clumping properties, suffer from the drawback that they cannot be disposed of in a circular manner, in addition to causing environmental degradation during the extraction phase. Moreover, with reference to absorbent litters, the absorbency exhibited by mineral litters is lower than that exhibited by litters produced from vegetable materials, thereby making them less efficient.

With reference to plant-based litters, existing products exhibit various drawbacks depending on the material used:
- those made of cellulose and having no clumping action are found to have poor absorbency, since they leave the litter wet, and furthermore they show poor odor control, in particular with regard to the reduction of the ammonia component;
- those made from cereals, although exhibiting acceptable performance in terms of clumping, are poor in absorbency and are potentially dangerous, since they tend to be eaten by the animals using the litter;
- those made solely of pressed wood sawdust, very similar to heating pellets, have a maximum absorbency of 90-100%, as they are manufactured according to the same process as combustible pellets.

### PURPOSES AND SUMMARY OF THE INVENTION

A purpose of the present invention is to describe a pet litter, in particular for cats, which makes it possible to mitigate the above-described drawbacks. A further purpose of the present disclosure is to describe a method for producing said litter. A further purpose of the present invention is to devise a litter having clumping properties and, at the same time, absorbent and hygienic properties that are superior to those currently available on the market.

In order to solve or mitigate the drawbacks of the litters known in the prior art, the present invention has as its subject a plant-based pet litter, in particular for cats, comprising a first plant-based component consisting of wood waste, preferably conifer wood.

According to a non-limiting aspect, the wood waste are preferably wood waste from plants belonging to the conifer family.

According to a further non-limiting aspect, the wood waste have a particle size distribution falling within a range of 0,5 mm - 6 mm, so as to eliminate excessively fine sawdust particles that could be harmful to animals.

According to a further non-limiting aspect, said plant-based litter comprises a second plant-based component in the form of shredded straw in order to impart increased absorbency.

According to a further non-limiting aspect, said litter comprises an additive in the form of oils and a starch, wherein said oils are preferably sprayed onto the litter, while the starch is added in powdered form.

According to a further non-limiting aspect, the oils are: Sunflower Oil and Neem Oil.

According to a further non-limiting aspect, Starch is Corn Starch.

According to a further non-limiting aspect, said litter includes a third plant-based component comprising by-product of the processing of a cereal chosen between Barley and/or Corn to give the litter itself its clumping properties.

According to a further non-limiting aspect, the additive is configured to improve absorbency, reduce the odor of animal waste and add a sanitizing effect and is present in an amount equal to 4,5% of the total weight of the litter.

According to a further non-limiting aspect, the litter is a compostable litter as it includes components that are all of plant origin and therefore it is easily disposable being biodegradable.

According to a further non-limiting aspect, the litter therefore has both absorbent and clumping properties.

According to a further non-limiting aspect, the litter is a substantially non-dusty litter.

The present invention further describes a method for producing a litter in accordance with one or more of the aspects described herein.

Said method comprises the following steps:
- mixing
   - a first plant-based component consisting of wood waste, preferably conifer wood,
   - a second plant-based component in the form of shredded straw;
   - an additive comprising:
      - a starch, such as corn starch,
      - sunflower oil,
   obtaining an intermediate product,
- adding to the intermediate product a third plant-based component comprising by-product of the processing of a cereal, chosen between barley and/or corn.

According to a further non-limiting aspect, the first component is previously treated with a super-drying heat treatment to bring the relative humidity to values of 4%-5%.

According to a further non-limiting aspect, mixing is aimed at generating an intermediate product in the form of pellets.

According to a further non-limiting aspect, mixing includes the addition of Neem Oil preferably at approximately 1,5% of the total weight of the litter.

According to a further non-limiting aspect wherein the mixing is aimed at generating an intermediate product in the form of a pellet and wherein said intermediate product is previously crushed before the addition of the third plant-based component. According to a further non-limiting aspect, as regards the first plant-based component, wood waste with a size smaller than 0,5 mm and larger than 6 mm is discarded in order to eliminate all those parts of waste that are on the one hand too thin and could be harmful to animals and on the other hand too large and therefore unsuitable for correct processing.

According to a further non-limiting aspect, the intermediate product obtained following mixing is uniform in weight and/or size.

According to a further non-limiting aspect, the intermediate product is obtained by using a known pelletizing machine wherein the first and second plant-based components, both additives, are introduced into an input hopper and wherein an activation of compacting organs produces the plurality of compressed granular elements or pellets.

According to a further non-limiting aspect, the pelletization step determines the production of a litter whose density is substantially between 380 and 450 kg/m2.

According to a further non-limiting aspect, the pelletization step determines the obtaining of a plurality of compressed granular elements or pellets whose average size is substantially between 1 cm and 3 cm and a diameter of approximately 6 mm.

According to a further non-limiting aspect, the method comprises the crushing step of the intermediate product wherein the compressed granular elements or pellets are crushed to obtain a grain size of 1 to 3 mm.

According to a further non-limiting aspect, the method further comprises a step of individually screening the first, second and third plant-based component or following the step of adding the third plant-based component.

According to a further non-limiting aspect, the method comprises the step of adding to the intermediate product a third plant-based component comprising by-product of the processing of a cereal chosen between Barley and/or Corn, wherein the cereal is preferably of national origin and derived from food processing waste not intended for human consumption or the production of animal feed.

As a further non-limiting aspect, the barley and/or corn are first subjected to a natural and non-chemical treatment to prevent the onset of parasites, mold and bacteria.

According to a further non-limiting aspect, the cereal is added already crushed to obtain the desired granulometry.

According to a further non-limiting aspect, the method in the step of adding a third plant-based component to the intermediate product requires that the first and second plant-based components, both added together with the third plant-based component, are inserted into a mixer to create a mix of wood waste, straw, additives and cereal.

According to a further non-limiting aspect, the litter obtained following the mixing step is a substantially uniform litter, with a homogeneous texture.

According to a first aspect, the present invention has as its subject a method for the production of an agglomerating plant-based litter defined by claims 1-6.

### DETAILED DESCRIPTION OF THE INVENTION

The present invention relates to a litter for pets, in particular for cats, comprising a plurality of compressed granular elements or pellets which are crushed and sifted to produce a litter with clumping and absorbent properties.

Clumping litter is a litter designed to absorb moisture and liquid from cat waste, forming compact clumps that are easy to remove and keep the rest of the litter box clean.

To increase moisture absorption and prevent unpleasant odors, this litter is an eco-friendly litter comprising:
- a first plant-based component consisting of wood waste, preferably coniferous wood,
- a second plant-based component in the form of shredded straw,
- an additive comprising:
   - a starch, such as corn starch,
   - sunflower oil,
- a third plant-based component comprising by-product of the processing of a cereal, chosen between barley and/or corn.

It should be understood that the by-product of the processing of a cereal essentially consists of the casing of the caryopsis.

This litter as an additive further comprises Neem Oil, preferably at approximately 1,5% of the total weight.

It has been observed that the use of wood waste from plants of the Conifer family allows for a significant absorption of liquids when compared to other types of wood, and in conjunction with this effect, it allows for the effective control of the odors of animal excrement.

The term "wood waste" refers to residues or by-products from wood processing that are no longer suitable for the direct manufacture of furniture or structures, but that may be reused in other ways. Examples of wood residues include: sawdust, intended as fine wood powder; chips, intended as larger and irregular pieces; bark; planing residues; unfinished or irregular wood pieces; residues from carpentry workshops or sawmills; small-sized branches; and traces of foliage.

The wood residues preferably used for the production of pet litters are in the form of sawdust or wood chips. For the production of litters, chemically treated, painted, or glued woods are to be avoided; furthermore, woods containing aromatic oils that may irritate the respiratory tract of animals are also to be avoided.

For each kilogram of litter, the first plant-based component represents 35% by weight of the total weight of the litter, the second plant-based component in the form of straw represents 10,5% by weight, while the additive is present in the litter in an amount of 4,5% by weight of the total weight, wherein said 4,5% is divided into:
- 1,5% corn starch,
- 1,5% sunflower oil, and
- 1,5% neem oil,
and the third plant-based component is present in an amount of 50% by weight of the total weight of the litter.

Once the amount of wood residues and straw to be introduced into a loading tank has been selected, according to a preferred embodiment, the corn starch is added in powdered form and mixed with the wood residues and straw, while the sunflower oil and the neem oil are sprayed together onto the wood residues and straw.

Sunflower oil has the property of retaining liquids and therefore increasing the absorbent capacity of the litter.

The sunflower oil and the neem oil are preferably mixed together with the addition of water in order to be sprayed. The straw added to the wood residues imparts absorbent properties to the litter.

The addition of the additive to the wood residues and straw increases the relative moisture content up to a value of about 10%, thereby allowing a compound to be obtained having a durability of 60-70%, as opposed to known litter pellets in which the durability is 98%.

The neem oil, on the other hand, imparts sanitizing and antibacterial/antiparasitic properties to the litter.

The intermediate product thus obtained is introduced into a hot press for pelletization, by means of a machine provided with polished dies.

The intermediate product exiting the press is a compressed pellet or granulate comprising the above-mentioned components and having a relative moisture content of about 5,5%.

The litter which is the subject of the present patent application is characterized by a plurality of granular elements, wherein the first and second plant-based components, added with corn starch, sunflower oil, and neem oil, and the third plant-based component are mixed together.

Preferably, but not limitedly, the average size of each compressed granular element or pellet ranges between about 1 cm and 3 cm. The selection of the pellet size is at the discretion of the manufacturer and, where possible, is regulated by the pelletizing machine.

The present invention further describes a method for producing a plant-based clumping and absorbent litter.

Said method comprising the steps of:
- mixing:
   - a first plant-based component consisting of wood residues, preferably conifer wood;
   - a second plant-based component in the form of shredded straw;
   - an additive comprising:
      - a starch, for example corn starch,
      - sunflower oil,
      thereby obtaining an intermediate product;
- adding to the intermediate product a third plant-based component comprising a by-product of the processing of a cereal selected from barley and/or corn.

Preferably, the first plant-based component has a particle size in the range of 0,5 mm to 6 mm.

Furthermore, the present method provides that the first plant-based component is preliminarily treated by means of a thermal over-drying treatment in order to bring the relative moisture content to values of 4%-5%.

The present method further provides that the mixing step comprises the addition of neem oil, preferably in an amount of about 1,5% by weight of the total weight of the litter.

The mixing step is configured to generate an intermediate product in pellet form, wherein said intermediate product is preliminarily crushed before the addition of the third plant-based component.

The method further comprises a screening step carried out separately on the first, second, and third plant-based components, or after the step of adding the third plant-based component.

The first plant-based component is preferably conifer wood residues, wherein the bark portion is preferably selected and the powdery fraction is removed.

The quantity of residues waste and straw selected for insertion into the loading tank is added with Corn Starch (1,5%) which is added in powder form and with Sunflower Oil (1,5%) and Neem Oil (1,5%) which are mixed with water and sprayed on the wood waste and straw.

Following this addition, the relative humidity rises to values of around 10%.

A predefined quantity of the first and second plant components, both with additives, is inserted into the hopper of a pelletizing machine to be pelletized into a plurality of compressed granular elements or pellets. Compacting devices of a known type, and therefore not described here, are present in the pelletizing machine and are activated to produce the plurality of compressed granular elements or pellets.

In particular, the pelletization step determines the creation of a plurality of compressed granular elements or pellets.

The pelletizing step is intended to produce compressed granular elements or uniform pellets, particularly uniform in size and weight, whose average size is substantially between 1 cm and 3 cm and a diameter of approximately 6 mm.

The product that comes out of the pelletizing machine is a pellet of the mix of ingredients indicated above, which will have a relative humidity of approximately 5,5%.

The pelletization step determines the production of a litter whose density is essentially between 380 and 450 kg/m2.

The overdrying and pelletization steps produce a product with a shorter shelf life than conventional litters. This is an advantage because the compressed granular elements are softer to the touch and have a greater capacity to absorb and retain liquids.

The granular elements of the intermediate product thus obtained are crushed in order to obtain a mixture having a granulometric size in the range of 2-3 mm.

The method comprises, following the crushing step, a step of adding to the intermediate product a third plant-based component comprising by-product of the processing of a cereal chosen between Barley and/or Corn.

The cereal is preferably a national cereal derived from food processing waste and more preferably the cereal is chosen between Barley and/or Corn.

Before being mixed with the ground plant-based mixture, the cereal is naturally treated to prevent the onset of parasites, mold, and bacteria.

The process described above allows for the creation of a clumping litter with wood waste, straw, corn starch, essential oils and cereals. This innovative wood processing method allows for the production of a product with high liquid and ammonia absorbency and clumping properties thanks to the mixing with cereals.

This allows for a clumping litter that simultaneously absorbs and retains odors in a unique way.

The resulting litter is therefore:
- antistatic, so it doesn't stick to the animal's fur.
- essentially dust-free, so the animal doesn't breathe in fine particles that can compromise its respiratory system over time, and its paws don't get dusty from use.

The litter which is the subject of this patent application has a low ecological impact.

The litter which is the subject of this patent application can be conveniently integrated into a bag of predefined volume.

The materials and dimensions of the invention, as described above, may be any according to requirements. Furthermore, all details may be replaced with technically equivalent ones, without thereby departing from the scope of this patent application.

## Claims

1. Method for producing a pet litter comprising the following steps:
- mixing:
. a first plant-based component consisting of wood waste, preferably coniferous wood,
. a second plant-based component in the form of shredded straw,
. an additive comprising:
- a starch, for example corn starch,
- sunflower oil,
obtaining an intermediate product,
- adding to the intermediate product the third plant-based component comprising by-products of the processing a cereal selected from barley and/or corn
wherein said mixing is carried out to generate said intermediate product in pellet form, and wherein said intermediate product is pre-crushed before adding a third plant-based component.

2. Method according to claim 1, wherein said first plant-based component is pre-treated by a thermal over-drying process to bring the relative humidity to values of 4%-5%.

3. Method according to claim 1, further comprising a screening step for the first, second, and third plant-based components individually or after the addition of the third plant-based component.

4. Method according to any of claims 1 - 3, wherein during said mixing, neem oil is added, preferably at about 1,5% of the total weight of the litter.

5. Method according to any of claims 1 - 3, wherein the corn starch is added in powder form and mixed with the wood waste and straw.

6. Method according to any of claims 4 or 5, wherein sunflower oil and neem oil are mixed with water to be sprayed together on the first and second plant-based components during said mixing.
